(19) **Europäisches Patentamt / European Patent Office / Office européen des brevets**

(11) **EP 2 113 578 B1**

(12) **EUROPÄISCHE PATENTSCHRIFT**

(45) Veröffentlichungstag und Bekanntmachung des Hinweises auf die Patenterteilung:
**08.11.2017 Patentblatt 2017/45**

(51) Int Cl.:
*C22C 19/07* *(2006.01)*  *C23C 18/02* *(2006.01)*
*B23K 9/04* *(2006.01)*  *C23C 28/02* *(2006.01)*
*C23C 4/12* *(2016.01)*  *C23C 24/04* *(2006.01)*
*C23C 24/10* *(2006.01)*  *B32B 15/01* *(2006.01)*
*C22C 19/00* *(2006.01)*  *C22C 19/03* *(2006.01)*
*C22C 19/05* *(2006.01)*  *C22C 30/00* *(2006.01)*

(21) Anmeldenummer: **09004075.9**

(22) Anmeldetag: **21.03.2009**

(54) **Metallkörper mit metallischer Schutzschicht**

Metal body with metallic protective coating

Corps en métal doté d'une couche de protection métallique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **12.04.2008 DE 102008018539**

(43) Veröffentlichungstag der Anmeldung:
**04.11.2009 Patentblatt 2009/45**

(73) Patentinhaber: **Berthold, Jürgen**
**97464 Niederwerrn (DE)**

(72) Erfinder: **Berthold, Jürgen**
**97464 Niederwerrn (DE)**

(56) Entgegenhaltungen:
EP-A- 1 209 246          DE-A1- 2 334 470
DE-A1-102004 047 196     FR-A1- 2 764 220
JP-A- 7 316 772          JP-A- 8 296 023
US-A- 3 274 371          US-A- 6 001 426
US-A1- 2007 269 608

- **MOLLEDA F ET AL: "A study of the solid-liquid interface in cobalt base alloy (Stellite) coatings deposited by fusion welding (TIG)" MATERIALS CHARACTERIZATION, ELSEVIER, NEW YORK, NY, US, Bd. 57, Nr. 4-5, 1. Dezember 2006 (2006-12-01), Seiten 227-231, XP025114520 ISSN: 1044-5803 [gefunden am 2006-12-01]**
- **BUTA SINGH SIDHU ET AL: "High-Temperature Oxidation Behavior of NiCrA1Y Bond Coats and Stellite-6 Plasma-Sprayed Coatings" OXIDATION OF METALS, KLUWER ACADEMIC PUBLISHERS-PLENUM PUBLISHERS, NE, Bd. 63, Nr. 3-4, 1. April 2005 (2005-04-01), Seiten 241-259, XP019290149 ISSN: 1573-4889**
- **SIDHU T S ET AL: "Studies of the metallurgical and mechanical properties of high velocity oxy-fuel sprayed stellite-6 coatings on Ni- and Fe-based superalloys" SURFACE AND COATINGS TECHNOLOGY, ELSEVIER, AMSTERDAM, NL, Bd. 201, Nr. 1-2, 12. September 2006 (2006-09-12), Seiten 273-281, XP024996471 ISSN: 0257-8972 [gefunden am 2006-09-12]**

**Beschreibung**

Die Erfindung bezieht sich auf einen Metallkörper, auf den zumindest teilweise eine Metallschicht als thermischer und/oder mechanischer und/oder chemischer Schutz aufgetragen ist, die aus wenigstens drei Teilschichten besteht, von denen die erste als Haftschicht direkt auf der Oberfläche des Metallkörper aufliegt und darauf wenigstens zwei weitere Schutzschichten aufgebaut sind und wenigstens eine Schutzschicht die Bestandteile Eisen, Kohlenstoff, Silizium, Chrom, Molybdän, Nickel, Kobalt und Niob enthält, wobei die relativen Anteile der Bestandteile innerhalb der folgenden Grenzen liegen:

- Eisen von 5 bis 20 % und
- Kohlenstoff von 0,2 bis 3,5 % und
- Silizium von 0,2 bis 2,5 % und
- Nickel von 4 bis 12,5 %.

Anlagen und Maschinen enthalten oft Metallkörper wie Wärmetauscher, Transportschnecken oder Bearbeitungswerkzeuge, die zur Erfüllung ihrer Funktion aus einem Metall, wie z.B. Stahl, konstruiert und gefertigt werden, das im Inneren alle Erfordernisse für diese Funktion vollauf erfüllt, jedoch den äußeren thermischen und/oder mechanischen und/oder chemischen Belastungen der Umgebung am Einsatzort nicht gewachsen ist. Erforderlich sind unter anderem:

• Korrosionsbeständigkeit bei sehr hohen Temperaturen
• Abriebbeständigkeit durch einen hohem Härtegrad der Oberfläche
• Beständigkeit gegen Chemikalien wie Sulfide und Chloride

Als Schutz vor diesen Belastungen hat es sich bewährt, auf den Metallkörper andere Metalle aufzutragen, die den Belastungen der direkten Umgebung standhalten, aber für die eigentliche Funktion des Metallkörpers ungeeignet oder allzu teuer sind. Als Verfahren für das Auftragen eines Metalls in einer relativ dünnen Schicht auf einen Metallkörper sind unter anderem Schweißen und Metallspritzen bekannt.

Metallspritzen ist ein thermisches Beschichtungsverfahren, bei dem Metall oder eine Metalllegierung durch Erhitzen verflüssigt wird und mit einem Werkzeug, wie z.B. einem Schleuderrad, oder mittels eines strömenden Gases, wie z.B. Luft, auf den Metallkörper verbracht wird, wo es erstarrt und als Schutzschicht dient.

Da an die Schichtmaterialien höchst unterschiedliche Anforderungen gestellt werden, gibt es auch eine große Anzahl von höchst unterschiedlichen Metalllegierungen, die als Schutzschichten für Metallkörper genutzt werden.

Legierungen haben oft völlig andere physikalische und chemische Eigenschaften als die reinen Metalle. Vor allem die Härte ist teilweise um Größenordnungen höher. Ebenso ist vielfach die Korrosionsbeständigkeit deutlich erhöht. Der Schmelzpunkt von Legierungen liegt dagegen unter dem der reinen Metalle.

Durch die prinzipiell kaum begrenzte Kombination von verschiedenen Metallen kann z.B. die Härte des Spritzwerkstoffes gemäß den Anforderungen genau definiert werden, wobei Härtegrade von 1'400HV nicht ungewöhnlich sind.

Das Patent DE 10 2004 047 196 beschreibt als Schutzschicht eine Legierung aus 8 bis 15 % Nickel (Ni), 15 bis 22% Chrom (Cr), 2,2 bis 3,6% Molybdän (Mo), 1,5 bis 2,5 % Mangan (Mn), 0,5 bis 1,5% Silizium (Si) und einer kleinen Menge von Eisen (Fe). Diese Bestandteile ergeben eine Schutzschicht mit einer Härte von wenigstens 700 HV, die einen guten Schutz gegen das Eindringen von Gasen bietet, und auch bei den hohen Temperaturen, wie sie z.B. in Öfen herrschen, noch eine hohe Zugfestigkeit und eine hohe Verschleißfestigkeit aufweist. Zur optimalen Anpassung an andere Anwendungen sind viele andere Materialzusammensetzungen für die Schutzschicht bekannt.

Das aufzutragende Material wird z.B. in Form eines Pulvers oder eines Drahtes gebracht, in unmittelbarer Nähe der zu beschichtenden Oberfläche in jeweils kleiner Menge kontinuierlich verflüssigt und dann auf die Oberfläche gespritzt, wo es abkühlt und dabei erhärtet.

Ein Problem des aktuellen Standes der Technik ist jedoch die Haftung der Schutzschicht auf dem Metallkörper. Da das Material des Metallkörpers auf dessen Funktion und dessen Kosten optimiert ist und die Legierung der Schutzschicht an die Umgebungsbedingungen angepasst ist, wird damit keinesfalls zwangsläufig auch eine optimale Haftung der Schutzschicht auf dem Metallkörper erreicht.

Als eine mögliche Alternative zur verbesserten Haftung der Schutzschicht auf dem Metallkörper beschreibt DE 10 2004 047 196 eine zusätzliche Haftschicht zwischen Metallkörper und Schutzschicht, die vor allem auf eine optimale Verbindung optimiert ist. Es liegt jedoch in der Natur der Sache, dass auch mit einer separaten Haftschicht keine Universallösung für das Aufbringen aller denkbaren Schutzschichten gefunden werden kann, weil - wie zuvor bereits erwähnt - die Verbindungen von Metallen oft ganz andere Eigenschaften als die einzelnen Bestandteile oder als ähnliche Legierungen haben.

Eine Legierung mit den Bestandteilen Kohlenstoff, Silizium, Mangan, Chrom, Molybdän, Nickel und Eisen ist aus der DE 10 2004 047 bekannt und hat sich bei einer kombinierten Belastung durch Hitze, diverse Gase und mechanische Belastungen bewährt.

In der Anwendung dieser bekannten Legierung hat sich gezeigt, dass sie gegen hohe Temperaturen und gegen etliche Säuren sehr beständig ist und auch eine gute Abriebfestigkeit aufweist, jedoch stets nur solange, wie die Schutzschicht noch als im Ganzen vollständige Schicht besteht.

Auf aktuellem Stand der Technik bietet die Firma Deloro Stellite zur Herstellung von Schutzschichten auf Metallen die Lieferung von Halbzeugen mit den folgenden Bestandteilen an: Eisen (Fe) 18,00%, Kohlenstoff (C) 1,30%, Silizium (Si) 1,00%, Chrom (Cr) 31,00%, Molybdän (Mo) 8,00%, Nickel (Ni) 8.00%, Kobalt (Co) 24,70% und Niob (Nb) 8,00%.

Eine Schutzschicht aus dieser Legierung soll besonders gegen Abrieb durch Reibung von Metall auf Metall und gegen Kavitationserosion beständig sein. Genannt werden Anwendungen in Salzwasser oder in chlorhaltigen Lösungen.

Nachteilig ist, dass sie für Temperaturen ab 500 °C nicht geeignet ist. Gegen Belastungen durch Sauerstoff oder Chloride wird keine besondere Widerstandsfähigkeit genannt. Besonders nachteilig ist, dass nicht angegeben wird, wie eine hohe Haftfähigkeit der Schutzschicht und deren Beständigkeit gegen Risse und Unterwanderungen vom Untergrund erreicht werden kann. Eine Einschränkung ist auch, dass keine Anpassung an Anwendungsfälle mit besonders extrem herausragenden Belastungen genannt wird.

Auf diesem Hintergrund hat sich die Erfindung die Aufgabe gestellt eine Schützschicht für Metallkörper zu entwickeln, die

- Korrosionsbeständigkeit bei sehr hohen Temperaturen und
- Abriebbeständigkeit durch einen hohem Härtegrad der Oberfläche und
- Beständigkeit gegen Chemikalien wie Sulfide und Chloride mit
- einer belastbaren Haftung zum Grundmaterial verbindet und
- durch Änderungen einer oder mehrerer Legierungsanteile innerhalb bestimmter Grenzen an eine erhöhte Sauerstoffbelastung oder eine andere korrosive Belastung oder an eine erhöhte mechanische Belastung angepasst werden kann oder die Bildung der Schutzschicht oder deren Belastbarkeit verbessert oder die Haftfähigkeit erhöht oder die Verarbeitung erleichtert.

Als Lösung präsentiert die Erfindung, dass die relativen Anteile der Bestandteile wenigstens einer Schutzschicht 22 innerhalb der folgenden Grenzen liegen:

- Chrom von 21 bis 29 % und
- Molybdän von 0,94 bis 8,5 % und
- Kobalt von 43 bis 54 % und
- Niob von 1 bis 7,2 % und

weitere Bestandteile wenigstens einer Schutzschicht 22 innerhalb der folgenden Grenzen

- Mangan von 0,05 bis 5,0 % und
- Phosphor von 0,01 bis 0,1 % und
- Schwefel von 0,001 bis 0,2 % und
- Kupfer von 0,011 bis 0,1 % und
- Titan von 0,004 bis 1 %

sind.

Bei sehr hohen Belastungen, insbesondere bei gleichzeitig hohem mechanischen Druck, hohen Temperaturen und einer Exponierung insbesondere gegenüber Schwefelgasen, wie sie z.B. bei der Kohleverbrennung entstehen oder Chlorgasen, wie sie sich z.B. oft in Müllverbrennungsanlagen bilden, sowie einer kombinierten Belastung durch Schwefel- und Chlorgase entstanden oft Haarrisse, die zu ersten, noch minimalen Schäden am beschichteten Metallkörper führten. Dann machen sich nach vergleichsweise kurzer Zeit erste Abplatzungen von Teilbereichen der Schutzschicht bemerkbar, wodurch die Schutzschicht nicht länger gegen chemische und thermische Belastungen wirken kann. Auch die noch verbleibende Schutzwirkung gegen mechanischen Abrieb wird dann durch eine fortschreitende Unterwanderung der Schichtreste relativ schnell entfallen.

Es ist ein Verdienst der Erfindung, die Haftfähigkeit der Schutzschicht verbessert zu haben und dadurch eine erhebliche Verbesserung und Verlängerung der Wirkung der Schutzschicht erreicht zu haben.

Dieses Merkmal wird durch die Eigenschaften von Kobalt plausibilisiert. Es ist ein stahlgraues Schwermetall mit einer Dichte von 8,9 g/cm$^3$, das sich besonders durch seine hohe Zähigkeit auszeichnet. Weil es in seinem chemischen Verhalten Eisen und Nickel ähnelt, ist es nachvollziehbar, dass es als Bestandteil von Legierungen, die Eisen und Nickel enthalten, zur Erhöhung der Verschleiß- und Warmfestigkeit beiträgt und die Korrosionsfestigkeit erhöht.

Ein weiteres Merkmal von elementarem Kobalt ist seine Schmelztemperatur von 1495 °C, die niedriger als etliche andere, elementare Bestandteile der erfindungsgemäßen Legierung ist. Nur Mangan hat mit 1244 °C eine noch niedrigere Schmelztemperatur. Silizium mit 1410 °C und Nickel mit 1455 °C haben etwa die gleiche Schmelztemperatur wie Kobalt. Reines Eisen schmilzt erst bei 1535 °C, reiner Chrom bei 1857 °C, reines Molybdän bei 2623 °C und reiner Kohlenstoff bei 3550 °C. Wie bereits erwähnt, weisen Verbindungen je nach dem Anteil der darin enthaltenen Bestandteile andere Schmelztemperaturen auf.

Da sich die Tropfen der flüssigen Legierung auf ihrem Flug von der Düse bis zur Oberfläche des Metallkörpers durch die Umgebungsluft kontinuierlich abkühlen, erstarren diejenigen Teile des Tropfens, die das reine, chemisch nicht verbundene Element enthalten, zu unterschiedlichen Zeitpunkten. Reines Kobalt mit seiner relativ niedrigen Schmelztemperatur bleibt deshalb länger flüssig als andere, elementare Bestandteile. Deshalb kann das noch flüssige Kobalt bereits erstarrte Materialbereiche umströmen und dadurch für deren innige Anbindung an den zu beschichtenden Metallkörper sorgen.

Wo die Aufprallgeschwindigkeit bereits erstarrter Bestandteile so hoch ist, dass sie Partikel des zu beschichtenden Metallkörpers herauslösen und verschieben, kann noch flüssiges Kobalt zusammen mit den anderen, noch flüssigen Bestandteilen in den Krater um die Aufprallstelle hinein fließen und dadurch auf einer vergrößerten Oberfläche eine vollflächige Verbindung erzeugen.

Durch verschiedene Größe der Anteile der einzelnen Bestandteile der Schutzschicht kann sie an bestimmte Bedingungen noch besser angepasst werden. So ergibt z.B. die Verbrennung von Kohle einen hohen Anteil von Schwefel im Rauchgas, das auf Stahl und viele anderen Metalle korrosiv wirkt, nicht jedoch auf Chrom. Durch einen hohen Anteil von Chrom in der Schutzschicht kann deshalb der beschichtete Metallkörper gegen Schwefel geschützt werden.

Bei der Müllverbrennung mit einem Anteil von verschiedenen Kunststoffen, beschichteten Materialien und Verbundwerkstoffen entstehen diverse Chloride, gegen das Nickel resistent ist, weshalb ein hoher Anteil von Nickel die Schutzschicht für den Einsatz in Müllverbrennungsanlagen optimiert.

In Öfen zur Verbrennung von Holz enthalten die Rauchgase sowohl Schwefel wie auch Chloride. Eine darauf angepasste Schutzschicht enthält als größte Anteile Chrom und Nickel. Denkbar ist auch, dass eine erste Schutzschicht einen großen Chromanteil aufweist und eine zweite Schutzschicht einen großen Anteil von Nickel. Die Wirkungen beider Schutzschichten addieren sich.

Eine erfindungsgemäße Schutzschicht enthält weitere Bestandteile:

> Phosphor hält durch sein hohes Reduktionsvermögen eventuell eingedrungenen Sauerstoff von der Reaktion mit den Metallen ab, was die Stabilität weiter erhöht.

Schwefel unterstützt indirekt die Bildung einer homogenen Schutzschicht.

Kupfer verteilt sich aufgrund seiner niedrigen Schmelztemperatur von nur 1084,4 °C sehr gut in Kavitäten der Legierung. Seine gute thermische Leitfähigkeit sorgt für eine Homogenisierung der Temperaturverteilung und damit für ein gleichmäßiges Erstarren der flüssigen Legierung, was die Homogenität und damit die Belastbarkeit der Schutzschicht verbessert.

Niob verbessert die Fließfähigkeit und damit auch die Schweißbarkeit der flüssigen Schmelze.

Titan erhöht die hohe Korrosionsbeständigkeit und die Festigkeit der Schutzschicht.

Eine erfindungsgemäß zusammengesetzte Schutzschicht enthält als Bestandteile innerhalb der folgenden Grenzen: Eisen von 5 bis 20 %, Kohlenstoff von 0,2 bis 3,5 %, Silizium von 0,2 bis 2,5 %, Mangan von 0,05 bis 5,0 %, Phosphor von 0,01 bis 0,1 %, Schwefel von 0,001 bis 0,2 %, Chrom von 21 bis 29%, Molybdän von 1 bis 8,5 %, Nickel von 4 bis 12,5 %, Kobalt von 43 bis 54 %, Kupfer von 0,011 bis 0,1 %, Niob von 1 bis 7,2 % und Titan von 0,004 bis 1 %. Wenn der Anteil eines Bestandteiles verändert wird, muss überprüft werden, ob dann die Anteile der anderen Bestandteile noch in den genannten Grenzen liegen. Widrigenfalls muss ihr Anteil entsprechend angepasst werden. Wenn dadurch die entsprechend abgesunkenen Anteile anderer Bestandteile die Charakteristik der Legierung für eine bestimmte Anwendung in unerwünschter Weise verändern würden, muss auch der Anteil der für die Eigenschaften relevanten Bestandteile an die geplante Anwendung angepasst werden.

Eine Legierung, die in etlichen der hier genannten Anwendungsfälle erfolgreich eingesetzt worden ist enthält die folgenden Anteile: Eisen 13,84 %, Kohlenstoff 0,223 %, Silizium 0,63 %, Mangan 0,98 %, Phosphor 0,016 %, Schwefel 0,005 %, Chrom 25,6 %, Molybdän 0,94 %, Nickel 7,08 %, Kobalt 48,5 %, Kupfer 0,011 %, Niob 2,17 % und Titan 0,004%.

Wie erwähnt schließt eine Optimierung der Schutzschicht mit einer Steigerung der Schutzeigenschaften gegen eine Mischung aus verschiedenen Umwelteigenschaften - hier die Kombination aus hohen Temperaturen, hoher mechanischer Belastung und chemisch aggressiven Gasen - keinesfalls auch eine Verbesserung der Haftungsfähigkeit auf dem zu beschichtenden Metallkörper ein. Vielmehr ist durch die unterschiedlichen Eigenschaften bei Temperaturabhängiger Ausdehnung, Elastizität und Härte eine Verschlechterung der Haftfähigkeit bei Verbesserung der Schutzeigenschaften zu befürchten. Da die Schutzschicht jedoch bei einem Abplatzen schlagartig völlig wirkungslos wird, zählt auch die Haftfestigkeit zu den wesentlichen Eigenschaften.

Die Erfindung beschreibt zwei verschiedenen Ausführungsformen für die Ausbildung einer Haftschicht. Die erste Alternative ist die Einfügung einer anderen Metalllegierung, deren Bestandteile so gewählt sind, dass sie primär hohen Scher- und Zugkräften standhalten, die auf die Schutzschicht ausgeübt werden. Ebenso wichtig ist die thermische Beständigkeit, da die Schutzschicht mit ihrer hohen thermischen Leitfähigkeit Wärmeenergie fast vollständig weiterleitet. Dagegen ist die Haftschicht mechanischen und chemischen Belastungen nur in höchst geringem Umfang ausgesetzt, weil diese durch die Schutzschicht abgefangen werden.

Eine zweite Alternative für die Ausbildung der Haftschicht ist die mechanische Verzahnung zwischen dem Metallkörper und der Schutzschicht. Ähnlich dem Beispiel einer Kerbverzahnung zwischen einem Zahnrad und seiner Welle ist die Oberfläche uneben geformt, idealer Weise sogar mit Hinterschneidungen, wobei die Oberflächen der Schutzschicht und des Metallkörpers komplementär zueinander geformt sind. Bei dieser Alternative unterscheidet sich die Haftschicht also von den benachbarten Schichten nicht durch eine andere Materialzusammensetzung sondern durch eine abweichende Materialformung.

Für die erste Alternative einer Haftschicht aus anderem Werkstoff zwischen Metallkörper und der Schutzschicht sind je nach Anwendung und Zusammensetzung des Metallkörpers verschiedene Materialien geeignet. Für die erfindungsgemäße Schutzschicht wurden gute Ergebnisse mit Nickel, Aluminium und Chrom erzielt. Insbesondere Legierungen aus etwa 20% Aluminium und etwa 80% Nickel oder aus etwa 20% Chrom und 80% Nickel haben eine sehr gute Haftfähigkeit beim Auftragen der erfindungsgemäßen Schutzschicht gezeigt.

Bei der zweiten Alternative einer vor allem mechanisch orientierten Haftung der Schicht geht es um die gezielte Formung von Unebenheiten in der Oberfläche. Bei dem genannten Beispiel der Kerbverzahnung werden dafür besondere Werkzeuge eingesetzt, denn die Maßstäbe bewegen sich in der Größenordnung von Millimetern. Die erfindungsgemäße Haftschicht wird jedoch nach Mikrometern bemessen.

Es ist ein grundlegendes Merkmal der Erfindung, die aufzubringenden Partikel selbst als Werkzeug zur Formung der Oberfläche des Metallkörpers einzusetzen, und zwar in Größenordnungen, die der Stärke der aufzubringenden Schicht angepasst sind.

Und zwar hat sich erwiesen, dass die Aufprallgeschwindigkeit der Partikel der späteren Schutzschicht von sehr viel größerem Einfluss ist, als es nach dem allgemeinen Wissensstand der Beschichtungstechnologie zu erwarten gewesen wäre. So ist es zum Beispiel beim Aufbringen von Farbschichten bekannt, die Aufprallgeschwindigkeit der Farbelemente soweit zu steigern, dass die Elemente nicht nur auf der zu beschichtenden Fläche eintreffen, sondern mit einem Überschuss an kinetischer Energie versehen sind, der die Elemente zusätzlich noch auf der Oberfläche bewegt. Dabei bewegen sich die Elemente zuerst innerhalb der von Kohäsionskräften zusammengehaltenen Flüssigkeitsschicht auf der Oberfläche, so dass sie nicht sofort wieder von der Oberfläche abfallen, aber sich innerhalb der Flüssigkeitsschicht gut miteinander vermischen. Einige Elemente bewegen sich dabei innerhalb der Flüssigkeitsschicht so schnell, dass sie deren Grenzen wieder verlassen und dadurch den mit Flüssigkeit benetzten Bereich wieder vergrößern.

Ein weitere Steigerung der Aufprallgeschwindigkeit führt nicht etwa zu einer noch besseren Vermischung oder Ausdehnung der Farbbereiche sonder zu einem Abprallen der Farbelemente.

Im Unterschied dazu beschreibt ein erfindungsgemäßes Verfahren zum Auftragen von Metallpartikeln der erfindungsgemäßen Legierung in flüssiger oder teigiger Konsistenz als Schutzschicht auf Metallkörpern, dass deren Geschwindigkeit beim Aufprall auf die Oberfläche des Metallkörpers so hoch ist, dass sie aus dem getroffenen Bereich der Oberfläche des Metallkörpers einige Partikel herauslösen und diese Partikel etwas verschieben. Die heraus gelösten Partikel hinterlassen in der Oberfläche Vertiefungen, die mit dem flüssigen Material der Schutzschicht verfüllt werden. Dadurch vergrößert sich die wirksame Trennfläche zwischen den Schichten, so dass die spezifische Größe von Kräften, die auf die Trennfläche einwirken, reduziert wird und damit die Haftfähigkeit weiter verbessert wird.

Dabei können die Vertiefungen sogar in Bezug auf die Oberfläche Hinterschneidungen bilden, hinter die das flüssige Material der Schutzschicht b.z.w. der Haftschicht fließt und nach dem Erstarren eine krallenartige Befestigung ausbildet.

Die gelösten Partikel des Metallkörpers werden von der flüssigen Legierung der aufzubringenden Schicht umströmt und dadurch festgehalten. Wenn die Temperatur der flüssigen Legierung deutlich höher ist als die Schmelztemperatur des zu beschichtenden Metallkörpers werden die gelösten Metallpartikel zumindest angeschmolzen oder ganz verflüssigt und dabei in die neue Schicht integriert.

Wenn die erfindungsgemäßen Schichten auf Körper aus Eisen oder Stahl aufgebracht werden, wird der zuvor beschriebene Effekt häufig auftreten, da die Schmelztemperatur von Eisen niedriger ist als die Schmelztemperatur von etlichen Bestandteilen der erfindungsgemäßen Legierung der Schutzschicht.

Da nicht nur die Aufprallgeschwindigkeit der Partikel, sondern auch die Partikeltemperatur, sowie eine eventuelle Oberflächenrauheit der zu beschichtenden Metallfläche und die Reaktion des erfindungsgemäßen Partikelwerkstoffes mit dem Grundwerkstoff die Qualität der Haftung bestimmen, kann keine absolute Geschwindigkeit für eine optimale Haftung angegeben werden. Die Erfindung differenziert deshalb verschiedene Geschwindigkeitsbereiche.

Schon bei Aufprallgeschwindigkeiten bis zu 50 m/sec konnten in der Praxis signifikante Verbesserungen der Haftung beobachtet werden. Eine Geschwindigkeit von 50m/sec oder 180 km/h entspricht der Höchstgeschwindigkeit von manchen Automobilen, die bekanntermaßen bei einem Aufprall mit dieser Geschwindigkeit auf ein festes Hindernis extrem deformiert werden.

Die beim Aufprall mit der Geschwindigkeit v in den Partikeln der Masse m enthaltene kinetische Energie $E_{kln}$ beträgt

$$E_{kin} = \frac{1}{2} \cdot m \cdot v^2$$

Da die Geschwindigkeit mit dem Quadrat ihres Wertes eingeht, entspricht eine Verdoppelung der Geschwindigkeit einer Vervierfachung der kinetischen Energie.

Da in der Praxis zum Aufspritzen der erfindungsgemäßen Haft- und Schutzschichten für das Metallspritzen übliche Gerätschaften und Düsen verwendet werden, ist bei gegebenem Luftdruck eine Erhöhung der Partikelgeschwindigkeit durch Wechsel auf eine Düse mit einer kleineren Austrittsöffnung oder bei gegebenem Düsenquerschnitt die Erhöhung des Luftdruckes erforderlich. In praktischen Versuchen haben sich Luftdrücke von 5,5 bar und mehr als sinnvoll erwiesen.

Das erfindungsgemäße Verfahren ist für verschiedene Prinzipien des Metallspritzens geeignet. Beim Flammspritzen mit Draht oder Stab wird der Spritzwerkstoff in Form eines Drahtes oder eines Stabes zugeführt und im Zentrum einer Acetylen-Sauerstoff-Flamme kontinuierlich aufgeschmolzen. Mit Hilfe eines Zerstäubergases, z.B. Druckluft oder Stickstoff, werden aus dem Schmelzbereich die tröpfchenförmigen Spritzpartikel abgelöst und auf die zu beschichtende Oberfläche geschleudert.

Beim Flammspritzen mit Pulver wird der Spritzwerkstoff als Pulver aufbereitet und in einer Acetylen-Sauerstoff-Flamme an- oder aufgeschmolzen und mit Hilfe der expandierenden Verbrennungsgase auf die vorbereitete Werkstückoberfläche geschleudert. Falls erforderlich, kann zur Beschleunigung der Pulverteilchen auch noch ein zusätzliches Gas wie z.B. Argon oder Stickstoff verwendet werden.

Beim Lichtbogenspritzen werden zwei Drähte, die aus den Bestandteilen der Schutzschicht geformt sind, jeweils an einen Pol einer Stromquelle angeschlossen, in einem Lichtbogen abgeschmolzen und mittels Zerstäubergas, wie z.B. Druckluft, auf die vorbereitete Werkstückoberfläche geschleudert. Das Lichtbogenspritzen ist durch die elektrische Leitfähigkeit der metallischen Bestandteile möglich. Ei prinzipieller Nachteil von flüssigem Metall ist die hohe Neigung zur Bildung von Oxiden mit der Umgebungsluft. Durch die Verwendung von Stickstoff oder Argon als Zerstäubergas wird jedoch eine Oxydation der Materialien weitgehend unterbunden.

Ein prinzipieller Vorteil des Metallspritzens ist, dass sich damit auch relativ dünnwandige Hohlkörper wie zum Beispiel Wärmetauscher gut beschichten lassen, da das zu beschichtende Material nur wenig erwärmt wird und daher weder maßgeblich verformt wird noch zur Bildung von Rissen bei der Abkühlphase neigt.

Für eine aufgabengemäß besonders gut haftende Anbindung der Schutzschichten auf einem Metallkörper ist alternativ auch das Schweißen geeignet. Unter Schweißen versteht man gemäß DIN ISO 857-1 das unlösbare Verbinden von Bauteilen unter Anwendung von Wärme.

Für das Aufbringen der erfindungsgemäßen Legierung ist das Schmelzschweißen geeignet, also ein örtlich begrenzter Schmelzfluss ohne Anwendung von zusätzlichen externen Kräften. Die DIN 8580 bezeichnet das Beschichten eines Werkstückes durch Schweißen als Auftragsschweißen.

Für das Aufbringen der erfindungsgemäßen Schutzschicht schlägt die Erfindung deshalb alternativ das folgende Verfahren vor:

Aus einer zum Metallkörper beabstandeten Öffnung wird ein Draht kontinuierlich heraus geschoben, der alle Bestandteile der jeweiligen Teilschicht enthält. Der Draht und der Metallkörper sind mit den beiden Polen einer Schweißstromquelle verbunden. Zwischen dem Draht und dem Metallkörper bildet sich ein Lichtbogen, der die Bestandteile an der Spitze des Drahtes verflüssigt und innerhalb des Lichtbogens auf den Metallkörper verbringt. Um den Lichtbogen herum strömt aus einer ringförmigen Düsenöffnung ein Schutzgas, das einen kegelstumpfförmigen Schutzmantel gegen die Atmosphäre bildet.

Das besondere Merkmal des erfindungsgemäßen Verfahrens ist, dass die Strömungsgeschwindigkeit des Schutzgases deutlich höher ist, als es zur Bildung des Schutzmantels erforderlich ist und das Schutzgas die vom Lichtbogen bewegten Bestandteile des Drahtes zusätzlich beschleunigt, so dass sie in die geschmolzene, jeweils äußere Schicht des Metallkörpers eindringen und sich mit dieser Schicht teilweise vermischen.

Als Ergebnis entsteht ein Metallkörper, dessen Haftschicht aus einer partiellen Vermischung des geschmolzenen Materials vom Draht und der geschmolzenen, obersten Schicht des Metallkörpers besteht und dadurch eine mechanische Verzahnung zwischen Metallkörper und Schutzschicht bewirkt. Die Haftschicht ist hier also nicht durch ihren Werkstoff, sondern durch ihre Formgebung charakterisiert.

Dabei kann das Schutzgas ein Inertgas sein, dessen Bestandteile sich von den geschmolzenen Schichten des Metallkörpers und den geschmolzenen Bestandteilen des Drahtes fernhalten. Dieses Prinzip des Schweißens wird als MIG-Schweißen bezeichnet, also schweißen mit einem Metall-Inert-Gas. Bespiele für solche reaktionsträgen Inertgase sind Argon oder Helium. Das MIG-Verfahren ist besonders dann sinnvoll, wenn der zu beschichtende Metallkörper aus einem hochlegierten Stahl, aus NE-Metalle oder Al-Legierungen besteht.

Wenn der zu beschichtende Metallkörper jedoch aus unlegiertem oder nur gering legiertem Stahl besteht, bietet das MAG-Verfahren Vorteile. MAG steht für "Metall-Aktiv-Gas", wobei als aktives Gas vor allem $CO_2$ verwendet wird, das für eine bessere Wärmeabfuhr sorgt, und das Schweißgut leicht mit Kohlenstoff anreichert. Ganz im Sinne der Aufgabenstellung erhöht dieser Kohlenstoffanteil die Haftfähigkeit der Schichten aufeinander.

Es hat sich gezeigt, dass die erfindungsgemäßen Legierungen direkt nach dem Auftragen zumeist noch spanabhebend und/oder durch Schleifen bearbeitbar sind. Wenn die Schutzschicht jedoch nur ein Mal über eine bestimmte Temperaturgrenze hinaus erhitzt worden ist, erhöht sich - je nach relativem Anteil der Bestandteile - die Härte deutlich, wobei jedoch eine gewisse Elastizität erhalten bleibt. Je nach Legierung haben sich Erhitzungen in den Temperaturbereichen bis 150°, bis 300°, bis 500°, bis 1000° und bis 1500°C als sinnvoll erwiesen.

Erfindungsgemäß beschichtete Metallkörper sind aufgabengemäß insbesondere für Anwendungen geeignet, bei denen es auf hohe mechanische Festigkeit bei hohen Umgebungstemperaturen und chemische Belastung ankommt. Als Beispiele nennt die Erfindung Verdampferrohre, Flossenwandrohre, Membranwände, Überhitzungsrohre, Schottenüberhitzer, Shreddersiebe, Shredderrohre, Mahlwerke, Transportschnecken, Greifer, Schieber, Roste und andere Funktionen in Holzheizungen, Tierverwertungsanlagen, Krematorien, Shredderanlagen, Zementmühlen, Müllverbrennungsanlagen mit Klärschlammbeimischung, andere Müllverbrennungsanlagen, Recycling-Anlagen, Kohlekraftwerke, andere Kraftwerke, pharmazeutische Anlagen, Crackanlagen und andere petrochemische Anlagen

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:

Figur 1: Schnitt durch die Oberfläche eines Metallkörpers mit zwei aufgespritzten Schutzschichten

Figur 2: Schnitt durch die Oberfläche eines Metallkörpers mit zwei aufgeschweißten Schutzschichten

Die Figuren zeigen im Einzelnen:

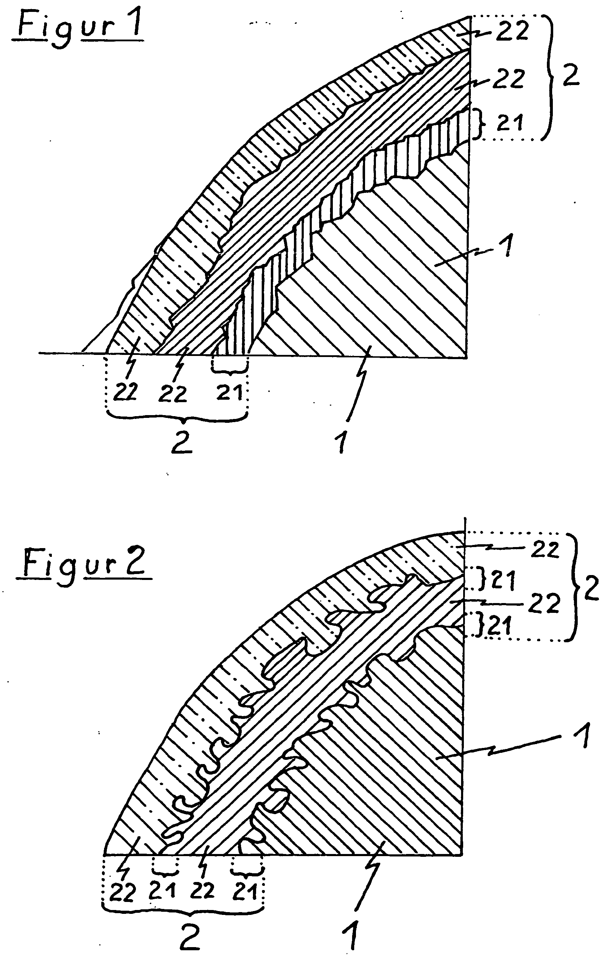

In **Figur 1** ist von einem Schnitt durch die Oberfläche eines Metallkörpers 1 ein kleiner Teil zu sehen, auf den zwei Schutzschichten 22 aufgespritzt worden sind. Die Darstellung ist stark vergrößert, da die Schutzschichten 22 in der Praxis meist eine Stärke von wenigen 100 Mikrometern haben. Zwischen der Oberfläche des Metallkörpers 1 und der ersten Schutzschicht 22 ist eine Haftschicht 21 aus einem anderen Werkstoff aufgebracht. Dabei ist in der Zeichnung durch unterschiedliche Schraffur jeweils eine andere Zusammensetzung gekennzeichnet.

In Figur 1 wird durch die polygonale Form der Trennlinien zwischen den verschiedenen Schichten erkennbar, dass aus der jeweils beschichteten Oberfläche viele kleine Partikel einzeln heraus gebrochen sind. Dabei wird gut nachvollziehbar, dass die kerbenartigen Vertiefungen beim Aufprall der mit hoher Geschwindigkeit aufgetragenen Partikeln entstanden sind. Es ist erkennbar, dass dadurch die Oberfläche gegenüber dem ursprünglichen Zustand vergrößert ist, was die Haftung verbessert.

Das gilt sowohl für den beschichteten Metallkörper 1 als auch für die Haftschicht 21 und die beiden darauf aufbauenden Schutzschichten 22. Aus ihrer kühlen und daher starren Oberfläche werden jeweils beim Aufspritzen der nächsten Schicht einige Partikel heraus gebrochen, die dann von der flüssigen Schicht entweder nur umspült oder ebenfalls aufgeschmolzen werden, so dass sie innerhalb der Schicht kaum mehr wahrnehmbar sind.

In Figur 1 wird ebenfalls deutlich, dass die Vertiefungen jedoch nicht einmal soweit in das Material hinein reichen, wie die Schichten stark sind, also in der Praxis nur bis zu einigen 100 Mikrometern. Dadurch wird verständlich, dass das Metallspritzen die Form und die Festigkeit des beschichteten Metallkörpers 1 kaum beeinflusst. Deshalb ist dieses Verfahren besonders für dünnwandige Hohlkörper wie zum Beispiel Rohre geeignet.

In **Figur 2** wird der gleiche Ausschnitt eines Querschnittes durch einen Metallkörper 1 wie in Figur 1 gezeigt, auf den ebenfalls zwei Schutzschichten 22 aufgetragen sind. Im Vergleich mit Figur 1 ist jedoch in Figur 2 deutlich eine andere, wellenförmige Ausbildung der Trennlinien zwischen den einzelnen Schichten erkennbar. Die Form ist vergleichbar mit den Wellen, die eine Flüssigkeit schlägt, wenn ein Festkörper in sie hineintaucht.

Diese beiden Zonen sind in Figur 2 jeweils als Haftschicht 21 gekennzeichnet, die in der hier gezeigten Ausführungsform gemäß Unteranspruch 10 jeweils aus einer partiellen Vermischung eines Teils der Schutzschicht 22 mit der obersten Schicht des Metallkörpers 1 b.z.w. mit der angrenzenden, zweiten Schutzschicht 22 besteht.

In Figur 2 wird also klar, dass sich die beiden Haftschichten 21 von den beiden Schutzschichten 22 nicht durch ihre Materialzusammenzusetzung unterscheiden, sondern aus den Zonen der beiden aneinandergrenzenden Schichten bestehen, in der die Trennschicht zwischen den verschiedenen Materialien wellenförmig

In Figur 2 wird auch nachvollziehbar, dass wellenförmige Ausbildung der Trennlinien zwischen den einzelnen Schichten auch in etwa dem Vorgang entspricht, der zu der Bildung der Wellenlinien führt:

Durch den Lichtbogen zwischen dem - in fester Form bereit gestellten - Material der Schutzschicht 22 und der Oberfläche des Metallkörpers 1 werden beide an ihrer Oberfläche verflüssigt. Durch die elektrische Spannung werden flüssige sowie noch nicht flüssige Partikel der späteren Schutzschicht 22 in Richtung auf den Metallkörper 1 hin bewegt.

Wenn diese Partikel mit einer hohen Geschwindigkeit auf die geschmolzene Oberfläche des Metallkörpers 1 auftreffen, lagern sie sich nicht nur daran an, sondern dringen auch in das Material ein. In Figur 2 ist gut nachvollziehbar, dass sie dabei auch flüssiges Material verdrängen, dass sich bei entsprechendem Überschuss an kinetischer Energie als Spritzer von der Aufprallstelle entfernt. Wenn sich der Spritzer in diesem Stadium durch Abkühlen erhärtet, bildet sich dabei ein Wulst oder eine Säule aus, die allseits von noch flüssigem Material umgeben ist, das sich formschlüssig anschmiegt.

Auf diese Weise bildet sich nach dem Erstarren eine wellenförmige oder gerippte Oberfläche aus, die exakt komplementär zur Oberfläche der benachbarten Schicht geformt ist.

In Figur 2 wird sehr schön verdeutlicht, dass dadurch die wirksame Oberfläche stark vergrößert wird und etliche Hinterschneidungen senkrecht zu den Schichten gebildet werden, die für eine Verzahnung der Schichten miteinander sorgen, was eine deutliche Verbesserung der Haftungsfähigkeit ergibt.

Diese Formation ist jedoch auf eine bestimmte Zone beschränkt, die dadurch die Funktion der Haftschicht 21 übernimmt - und in Ihrer Wirkung im Vergleich zum Aufspritzen übertrifft. Diese Zone ist in Figur 2 jeweils durch geschweifte Klammern gekennzeichnet.

Da die zweite Schutzschicht 22 nach dem gleichen Verfahren wie die erste Schutzschicht 22 aufgetragen worden ist, bildet sich auch zwischen der ersten und der zweiten Schutzschicht 22 eine Haftschicht 21 mit ihrer charakteristischen Formation aus.

In Figur 1 wird plausibilisiert, dass die Formation der Halteschicht 21 tiefer in den Metallkörper 1 eindringt als beim Aufspritzen. Deshalb ist das Aufschweißen der Schutzschichten 22 vorrangig für dickwandige oder massive Metallkörper 1 geeignet.

**Bezugszeichenliste**

1    Metallkörper, mit Metallschicht 2 beschichtet
2    Metallschicht, auf Metallkörper 1 aufgebaut
21   Haftschicht, Teil der Metallschicht 2 zur Verbindung einer Schutzschicht 22 mit dem Metallkörper 1 oder mit einer zweiten Schutzschicht 22
22   Schutzschicht, Teil der Metallschicht 2

**Patentansprüche**

**1.** Metallkörper (1), auf den zumindest teilweise eine Metallschicht (2) als thermischer und/oder mechanischer und/oder chemischer Schutz aufgetragen ist, die aus wenigstens drei Teilschichten besteht, von denen die erste als Haftschicht (21) direkt auf der Oberfläche des Metallkörper (1) aufliegt und darauf wenigstens zwei weitere Schutzschichten (22) aufgebaut sind und wenigstens eine Schutzschicht (22) die aus Folgenden Bestandteilen besteht :

   - Eisen von 5 bis 20 % und
   - Kohlenstoff von 0,2 bis 3,5 % und
   - Silizium von 0,2 bis 2,5 % und
   - Nickel von 4 bis 12,5 %
   - Chrom von 21 bis 29 % und
   - Molybdän von 0,94 bis 8,5 % und
   - Kobalt von 43 bis 54 % und
   - Niob von 1 bis 7,2 % und
   - Mangan von 0,05 bis 5,0 % und
   - Phosphor von 0.01 bis 0.1 % und
   - Schwefel von 0,001 bis 0,2 % und
   - Kupfer von 0,011 bis 0,1 % und
   - Titan von 0,004 bis 1 %

**2.** Metallkörper nach dem vorhergehenden Anspruch 1, **dadurch gekennzeichnet, dass** die Bestandteile wenigstens einer Schutzschicht (22) folgende relativen Anteile aufweisen:

   - Eisen 13,84 %
   - Kohlenstoff 0,223 % und
   - Silizium 0,63 % und
   - Mangan 0,98 % und
   - Phosphor 0,016 % und
   - Schwefel 0,005 % und
   - Chrom 25,6 % und
   - Molybdän 0,94 % und
   - Nickel 7,08 % und
   - Kobalt 48,5 % und
   - Kupfer 0.011 % und
   - Niob 2,17 % und
   - Titan 0,004%

**3.** Metallkörper nach einem der vorhergehenden Ansprüche, **dadurch gekennzeichnet, dass** in wenigstens einer Schutzschicht (22) die Anteile von Nickel und Chrom die jeweils größten sind.

**4.** Metallkörper nach einem der vorhergehenden Ansprüche, **dadurch gekennzeichnet, dass** wenigstens eine Schutzschicht (22) eine Stärke von maximal 3 mm aufweist.

**5.** Metallkörper nach einem der vorhergehenden Ansprüche, **dadurch gekennzeichnet, dass** die Haftschicht (21) als Bestandteile

   - Nickel und/oder
   - Aluminium und/oder
   - Chrom

enthält.

**6.** Metallkörper nach einem der vorhergehenden Ansprüche, **dadurch gekennzeichnet, dass** die Haftschicht (21) aus

   - 15 bis 25% Aluminium und
   - ansonsten aus Nickel

besteht.

**7.** Metallkörper nach einem der vorhergehenden Ansprüche, **dadurch gekennzeichnet, dass** die Haftschicht (21) aus

   - 15 bis 25 % Chrom und
   - ansonsten aus Nickel

besteht.

**8.** Metallkörper nach einem der vorhergehenden Ansprüche **dadurch gekennzeichnet, dass** die Haftschicht (21) aus einer partiellen Vermischung eines Teils der Schutzschicht (22) und der obersten Schicht des Metallkörpers (1) besteht.

9. Verfahren zum Aufbringen der Teilschichten der Metallschicht (2) auf den Metallkörper (1) nach einem der vorhergehenden Ansprüche, **dadurch gekennzeichnet, dass** durch Auftragsschweißen aus einer zum Metallkörper (1) beabstandeten Öffnung alle Bestandteile der jeweiligen Teilschicht in Form eines Drahtes kontinuierlich heraus geschoben werden und der Draht und der Metallkörper (1) mit den beiden Polen einer Schweißstromquelle verbunden sind und zwischen dem Draht und dem Metallkörper (1) ein Lichtbogen besteht, der die Bestandteile an der Spitze des Drahtes verflüssigt und innerhalb des Lichtbogens auf den Metallkörper (1) verbringt und um den Lichtbogen herum aus einer ringförmigen Düsenöffnung ein Schutzgas strömt, das einen kegelstumpfförmigen Schutzmantel gegen die Atmosphäre bildet, wobei die Strömungsgeschwindigkeit des Schutzgases deutlich höher ist, als es zur Bildung des Schutzmantels erforderlich ist und das Schutzgas die vom Lichtbogen bewegten Bestandteile des Drahtes zusätzlich beschleunigt, so dass sie in die geschmolzene, jeweils äußere Schicht des Metallkörpers (1) eindringen und sich mit dieser Schicht teilweise vermischen.

10. Verfahren nach einem der vorhergehenden Ansprüche, **dadurch gekennzeichnet, dass** das Schutzgas ein Inertgas ist, dessen Bestandteile sich von den geschmolzenen Schichten des Metallkörpers und den geschmolzenen Bestandteilen des Drahtes fernhalten.

11. Verfahren nach einem der vorhergehenden Ansprüche, **dadurch gekennzeichnet, dass** das Schutzgas ein Aktivgas ist, von dem Bestandteile in die geschmolzenen Schichten des Metallkörpers und die geschmolzenen Bestandteile des Drahtes übergehen.

12. Verfahren nach einem der vorhergehenden Ansprüche, **dadurch gekennzeichnet, dass** das Auftragen der Schutzschicht durch das

   - MIG-Schweißen und/oder
   - MAG-Schweißen und/oder
   - Schmelz-Schweißen

erfolgt.

13. Verfahren zur Anwendung von Metallkörpern (1) nach einem der vorhergehenden Ansprüche, **dadurch gekennzeichnet, dass** er nach dem vollständigen Auftragen aller Schutzschichten (22) zu Beginn der Benutzung einmal erhitzt und dann wieder abgekühlt wird.

14. Verfahren zur Anwendung von Metallkörpern (1) nach dem vorhergehenden Anspruch 15, **dadurch gekennzeichnet, dass** beim Erhitzen eine Temperatur von 150" C erreicht wird.

15. Verfahren zur Anwendung von Metallkörpern (1) nach dem vorhergehenden Anspruch 15, **dadurch gekennzeichnet, dass** beim Erhitzen eine Temperatur von 300° C erreicht wird.

16. Verfahren zur Anwendung von Metallkörpern (1) nach dem vorhergehenden Anspruch 15, **dadurch gekennzeichnet, dass** beim Erhitzen eine Temperatur von 500° C erreicht wird.

17. Verfahren zur Anwendung von Metallkörpern (1) nach dem vorhergehenden Anspruch 15, **dadurch gekennzeichnet, dass** beim Erhitzen eine Temperatur von 1000° C erreicht wird.

18. Verfahren zur Anwendung von Metallkörpern (1) nach dem vorhergehenden Anspruch 21, **dadurch gekennzeichnet, dass** beim Erhitzen eine Temperatur von 1500° C erreicht wird.

19. Anwendung von Metallkörpern (1) nach einem der vorhergehenden Ansprüche 1-8, **dadurch gekennzeichnet, dass** sie bei

   - Verdampferrohren und/oder
   - Flossenwandrohren und/oder
   - Membranwänden und/oder
   - Überhitzungsrohren und/oder
   - Schottenüberhitzern und/oder
   - Shreddersieben und/oder
   - Shredderrohren und/oder
   - Mahlwerken und/oder
   - Transportschnecken und/oder
   - Greifern und/oder
   - Schiebern und/oder
   - Rosten und/oder

anderen Funktionen in

   - Holzheizungen und/oder
   - Tierwertungsanlagen und/oder
   - Krematorien und/oder
   - Shredderanlagen und/oder
   - Zementmühlen und/oder
   - Müllverbrennungsanlagen mit Klärschlammbeimischung und/oder
   - anderen Müllverbrennungsanlagen und/oder
   - Recycling-Anlagen und/oder
   - Kohlekraftwerken und/oder
   - anderen Kraftwerken und/oder
   - pharmazeutischen Anlagen und/oder

- Crackanlagen und/oder
- anderen petrochemischen Anlagen

einsetzbar sind.


**Claims**

1. A metal body (1) on which at least at least partially a metal layer (2) as thermal and/or mechanical and/or chemical protection which consists of at least three partial layers, of (21) are applied directly on the surface of the substrate (22) and at least one protective layer (22) consisting of the following constituents:

   - Iron from 5 to 20 % and
   - Carbon from 0,2 to 3,5 % and
   - Silicon from 0,2 to 2,5 % and
   - Nickel from 4 to 12,5 %
   - Chrome from 21 to 29 % and
   - Molybdenum from 0,94 to 8,5 % and
   - Cobalt from 43 to 54 % and
   - Niobium from 1 to 7,2 % and
   - Mangan from 0,05 to 5,0 % and
   - Phosphorus from 0,01 to 0,1 % and
   - Sulfur from 0,001 to 0,2 % and
   - Copper from 0,011 to 0,1 % and
   - Titanium from 0,004 to 1%

2. The metal body according to claim 1 **characterized in that** the constituents of at least one protective layer (22) have the following relative proportions:

   - iron 13,84 %
   - Carbon 0,223 % and
   - Silicon 0,63 % and
   - Manganese 0,98 % and
   - Phosphorus 0,016 % and
   - Sulfur 0,005 % and
   - Chrome 25,6 % and
   - Molybdenum 0,94 % and
   - Nickel 7,08 % and
   - Cobalt 48,5 % and
   - Copper 0,011 % and
   - Niobium 2,17 % and
   - Titanium 0,004 %

3. Metal body according to one of the preceding claims, **characterised in that** in at least one protective layer (22) the proportions of nickel and chromium are respectively the largest.

4. The metal body as claimed in one of the preceding claims, thereby **characterized in that** at least one protective layer (22) thickness of a maximum of 3 mm.

5. Metal body according to one of the preceding claims, **characterised in that** the adhesive layer (21) is used as a component

   - nickel and/or
   - aluminum and/or
   - chrome

   contains.

6. The metal body as claimed in one of the preceding claims, **characterized in that** the adhesive layer (21) is composed of

   - 15 bis 25 % aluminum and
   - otherwise nickel

   consists.

7. Metal body according to one of the preceding claims, **characterized in that** the adhesive layer (21) is composed of

   - 15 bis 25 % chrome and
   - otherwise nickel

   consists.

8. Metal body according to one of the preceding claims, **characterized in that** the adhesive layer (21) is composed of a partial mixing of a part of the protective layer (22) and the uppermost layer of the metal body (1).

9. Method for applying the partial layers of the metal layer (2) the metal body (1) according to one of the preceding claims, **characterized in that** by application welding from to the metal body (1) are connected to the two poles of a welding current source and an arc is provided between the wire and the metal body (1) which liquefies the components at the tip of the wire and within the arc on the metal body (1) and around the arc from an annular nozzle opening shielding gas which forms a frustoconical protective sheath against the atmosphere, the flow velocity of the protective gas is significantly higher than it is to form the protective mantle and the protective gas additionally accelerates the components of the wire moved by the arc, so that they are forced into the molten, respectively outer layer of the metal body (1) mix layer partially.

10. The method as claimed in one of the preceding claims, wherein **characterized in that** the protective gas is an inert gas, the constituents of which are different form the molten layers of the metal body and the molten components of the wire.

**11.** The method as claimed In one of the preceding claims, wherein **characterized in that** the protective gas is an active gas from which constituents pass into the molten layers of the metal body and the molten constituents of the wire.

**12.** The method as claimed in one of the preceding claims, wherein **characterized in that** the application of the protective layer by the

- MIG-welding and/or
- MAG-welding and/or
- fusion-welding

takes place.

**13.** Method for the application of metal bodies (1) according to claim, **characterized in that** after the complete application of all protective layers (22), it is heated once at the beginning of use and then cooled again.

**14.** Process for the application of metal bodies (1) according to claim 15, **characterized in that** a temperature of 150 °C is reached during heating.

**15.** Process for the application of metal bodies (1) according to claim 15. **characterized in that** a temperature of 300 ° C is reached during heating.

**16.** Process for the application of metal bodies (1) according to claim 15, **characterized in that** a temperature of 500 °C is reached during heating.

**17.** Process for the application of metal bodies (1) according to claim 15, **characterized in that** a temperature of 1000 ° C is reached during heating.

**18.** Process for the application of metal bodies (1) according to claim 15, **characterized in that** a temperature of 1500 ° C is reached during heating.

**19.** Applications of metal bodies (1) according to one of the preceding claims **characterized in that** it comprises:

- Evaporator tubes and/or
- Finned wall tubes and/or
- Membrane walls and/or
- Overheating pipes and/or
- Scots superheaters and/or
- Shredder screen and/or
- Shredder tubes and/or
- Grinders and/or
- Shifters and/or
- Roast and/or

other functions in

- Wood heating and/or
- Animal evaluation systems and/or
- Crematoriums and/or
- Shredder plants and/or
- Cement mills and/or
- Waste incineration plants with sewage sludge admixture and/or
- Other waste incineration plants and/or
- Recycling plants and/or
- Coal-Fired power plants and/or
- Other power stations and/or

Rotary kilns and / or

- Pharmaceutical plants and/or
- Cracking equipment and / or
- other petrochemical plants

can be used.

**Revendications**

**1.** Corps métallique sur lequel est appliqué, du moins en partie, une couche de métal comme protection thermique et/ou mécanique et/ou chimique. Cette couche se compose d'au moins trois couches dont la première est posée directement à la surface du corps métallique (1) comme couche adhésive (21) et sur laquelle s'étagent au moins deux autres couches protectrices (22);
au moins une des couches protectrices (22) est formée des composants suivants:

- fer de 5 à 20 % et
- carbone de 0,2 à 3,5 % et
- silicium de 0,2 à 2,5 % et
- nickel de 4 à 12,5 %
- chrome de 21 à 29 % et
- molybdène de 0,94 à 8,5 % et
- cobalt de 43 à 54 % et
- niobium de 1 à 7,2 % et
- mangane de 0,05 à 5,0 % et
- phosphore de 0,01 à 0,1 % et
- soufre de 0,001 à 0,2 % et
- cuivre de 0,011 à 0,1 % et
- titane de 0,004 à 1 %

**2.** Corps de métal caractérisé, selon la définition 1, par le fait qu'au moins une couche protectrice (22) se compose des éléments relatifs suivants:

- fer 13,84 %
- carbone 0,223 % et
- silicium 0,63 % et
- manganèse 0,98 % et
- phosphore 0,016 % et
- soufre 0,005 % et

- chrome 25,6 % et
- molybdène 0,94 % et
- nickel 7,08 % et
- cobalt 48,5% et
- cuivre 0,011 % et
- niobium 2,17 % et
- titane 0,004 %

3. Corps métallique **caractérisé,** selon la définition précédente, par le fait qu'au moins une couche protectrice (22) contient les parts respectives le plus grandes de nickel et de chrome.

4. Corps métallique **caractérisé,** selon la définition précédente, par le fait qu'au moins une couche protectrice (22) est épaisse de 3 mm maximum.

5. Corps métallique **caractérisé,** selon la définition précédente, par le fait que la couche adhésive (21) contient

- du nickel et/ou
- de l'aluminium
- du chrome

6. Corps métallique **caractérisé,** selon la définition précédente, par le fait que la couche adhésive (21) se compose de

- 15 à 25% d'aluminium et
- pour tout le reste de nickel

7. Corps métallique **caractérisé,** selon la définition précédente, par le fait que la couche adhésive (21) se compose de

- 15 à 25 % d'chrome et
- pour tout le reste de nickel

8. Corps métallique **caractérisé,** selon la définition précédente, par le fait que la couche adhésive (21) se compose d'un alliage partiel d'une partie de la couche protectrice (21) et de la couche supérieure du corps métallique.

9. Procédé d'application des différents couches der la couche métallique (2) sur le corps de de métal selon les définitions précédentes: Il est **caractérisé par le fait qu'**en soudant par superposition à partir d'une ouverture à distance régulière du corps de métal (1) tous les composants des couches respective sont continuellement poussés en avant sous forme d'un fil et qu'ils sont connectés aux deux pôles d'une source électrique de soudage Qu'il existe un arc électrique entre le fil et le corps de métal (1) qui liquéfie les éléments à la pointe du fil et qui, à l'intérieur de l'arc électrique, les transporte sur le corps de métal et qu'autour de l'arc électrique du gaz sort d'un ajutage ronde formant un tronc de cône protégeant de l'atmosphère.

Dans ce cas la vitesse d'écoulement du gaz protecteur est sensiblement plus élevée que la formation du revêtement protecteur le demande et le gaz protecteur accélère en plus les éléments du fil mis en mouvement par l'arc électrique de façon à ce qu'ils pénètrent dans la couche extérieur du corps métallique (1) et se fondent partiellement dans cette couche.

10. Procédé selon une des définitions précédentes **caractérisé par le fait que** le gaz protecteur est un gaz inerte dont les composants se tiennent à l'écart de la couche fondue du corps de métal et des composants fondus du fil.

11. Procédé selon une des définitions précédentes, **caractérisé par le fait que** le gaz protecteur est un gaz actif dont certains éléments se fondent dans les couches fondues du corps métallique et dans celles du fil.

12. Procédé selon une des définitions précédentes, **caractérisé par le fait que** le revêtement de la couche protectrice fonctionne par

- soudage MIG et/ou
- soudage MAG et/ou
- soudure autogène

13. Procédé à utiliser pour les corps métalliques (1) selon une des exigences précédentes, **caractérisé par le fait que** celui-ci, après l'application complète de toutes les couches protectrices, est chauffé et fois, puis refroidi.

14. Procédé 15 à utiliser pour les corps métalliques (1) selon une des exigences précédentes, **caractérisé par le fait que** celui-ci sera chauffé à 150°.

15. Procédé à utiliser pour les corps métalliques (1) selon le critère précédent 15, **caractérisé par le fait que** celui-ci sera chauffé à 300°.

16. Procédé à utiliser pour les corps métalliques (1) selon le critère précédent 15, **caractérisé par le fait que** celui-ci sera chauffé à 500°.

17. Procédé à utiliser pour les corps métalliques (1) selon le critère précédent 15, **caractérisé par le fait que** celui-ci sera chauffé à 1000°.

18. Procédé à utiliser pour les corps métalliques (1) selon le critère précédent 21, **caractérisé par le fait que** celui-ci sera chauffé à 1500°.

19. Utilisation pour corps métalliques selon les critères précédents 1-8, **caractérisée par le fait qu'**on peut la mettre en oeuvre pour

- tubes d'évaporateur et/ou
- tuyaux de paroi d'ailette et/ou
- parois de membrane et/ou
- tubes de surchauffe et/ou
- scotch surchauffeurs et/ou
- déchiqueteuse-sept et/ou
- dèchiqueteuse-rotors et/ou
- meuleuses et/ou
- ver de transport et/ou
- pinces et/ou
- glissières et/ou
- rouille et/ou

d'autres fonctions

- chauffages à bois et/ou
- systems d'évaluation des animaux et/ou
- crématoire et/ou
- broyeurs déchiqueteuses et/ou
- usines de ciment et/ou
- les installations d'incinération de déchets aves mélange de boues d'épuration et/ou
- d'autres installations d'incinération des déchets et/ou
- recyclage arrivent et/ou
- centrales électriques au charbon et/ou
- d'autres centrales électriques et/ou
- Industrie sidérurgique Sinderanlagen et / ou
- fours rotatifs et/ou
- usines pharmaceutiques et/ou
- plantes de fissure et/ou
- d'autres usines pètrochimiquesnderen

peut être utilisé.

## Figur 1

## Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004047196
- DE 102004047